**Europäisches Patentamt**

**European Patent Office**

**Office européen des brevets**

(11) Numéro de publication : **0 305 239 B1**

# (12) FASCICULE DE BREVET EUROPEEN

(45) Date de publication du fascicule du brevet :
**06.05.92 Bulletin 92/19**

(21) Numéro de dépôt : **88401943.1**

(22) Date de dépôt : **26.07.88**

(51) Int. Cl.⁵ : **B21D 37/20,** B21D 45/00, B29C 51/44

(54) **Outil de presse notamment pour le détourage de pièces de tôle et procédé pour sa fabrication.**

(30) Priorité : **31.07.87 FR 8710910**

(43) Date de publication de la demande :
**01.03.89 Bulletin 89/09**

(45) Mention de la délivrance du brevet :
**06.05.92 Bulletin 92/19**

(84) Etats contractants désignés :
**DE ES GB IT**

(56) Documents cités :
**DE-B- 1 191 327**
**FR-A- 2 541 914**
**GB-A- 767 438**

(56) Documents cités :
**US-A- 2 771 851**
**US-A- 2 821 871**
**US-A- 3 020 785**
**US-A- 3 048 069**

(73) Titulaire : **CHAUSSON INGENIERIE**
**28 rue des Frères Chausson**
**F-92600 ASNIERES, Hauts de Seine (FR)**

(72) Inventeur : **Monza, Gérard**
**9 rue Henri Dunant**
**95580 Margency (FR)**

(74) Mandataire : **Madeuf, René Louis et al**
**Cabinet Madeuf Conseils en Propriété**
**Industrielle 3, Avenue Bugeaud**
**F-75116 Paris (FR)**

## Description

La présente invention concerne un nouvel outil de presse destiné essentiellement au détourage de pièces préalablement embouties. (voir example FR-A-2 541 914).

L'opération de détourage est habituellement exécutée par un poinçon coopérant avec des lames-matrices de coupe. Le poinçon est entouré au moins partiellement par un ou plusieurs dévêtisseurs qui sont des butées déplaçables axialement contre l'action de ressorts et qui assurent le serrage de la partie de chute de la pièce à détourer sur le dessus de la matrice.

Par ailleurs, pour extraire la pièce détourée, il est indispensable de disposer à l'intérieur des matrices de mécanismes d'éjection à ressorts ou à vérins dont la forme doit correspondre à celle de la pièce afin que celle-ci ne soit pas déformée lors du travail de l'éjecteur.

Les parties actives tant de l'éjecteur que du ou des dévêtisseurs sont des pièces de fonderie et sont usinées par des machines de reproduction travaillant à partir d'une pièce type ou d'un modèle.

La réalisation de ces pièces est par conséquent longue et coûteuse.

La présente invention crée un nouvel outil qui permet une réalisation extrêmement rapide, de l'ordre de quelques jours en supprimant un grand nombre d'usinages tout en assurant une précision d'exécution très grande.

De plus, selon l'invention, les pièces actives d'éjection et de dévêtissage n'étant plus métalliques, le travail de détourage devient beaucoup moins bruyant que jusqu'alors.

Conformément à l'invention, l'outil de presse pour le détourage de pièces embouties, l'outil comportant un poinçon entouré par un dévêtisseur et ledit poinçon coopérant avec au moins une matrice de coupe sur le dessus de laquelle le bord de la pièce est maintenu par le dévêtisseur, au moins l'espace délimité par la matrice contenant au moins un éjecteur en matière élastiquement déformable, ledit éjecteur présentant un dessus dont la forme correspond au moins partiellement à celle de la pièce et faisant légèrement saillie au-dessus du bord de coupe de la matrice lorsque l'outil est au repos, sa face etant conformée de manière complémentaire à la forme de la pièce et : supplémentairement le dévêtisseur est réalisé en matière élastiquement déformable, sa face faisant, en position de repos, saillie au-delà du poinçon et étant conformée de manière complémentaire à la forme d'une chute de la pièce.

Suivant une seconde disposition de l'invention relative à un procédé pour la fabrication : en résine synthétique au moins de l'éjecteur d'un outil à détourer une pièce emboutie celui-ci est caractérisé en ce qu'on prévoit de former au moins un dégagement dans une matrice ou une rehausse fixée sur une semelle d'un plateau de presse, en ce qu'on remplit ce dégagement d'une matière amovible du genre cire, vinyle ou analogue pour délimiter une paroi plane, en ce qu'on recouvre les parois internes de la matrice et de ses supports d'un lubrifiant de démoulage, en ce qu'on remplit l'espace libre de résine mélangée à son accélérateur durcisseur, en ce qu'on fait descendre un poinçon fixé à une seconde semelle après avoir muni le dessous du poinçon d'une pièce type ou d'un habillage correspondant à une pièce type de sorte que la surface libre de la résine est mise en forme pour correspondre à la forme des pièces qui seront à détourer, en ce qu'on maintient ladite presse fermée jusqu'à polymérisation de la résine, et en ce qu'on démoule la résine durcie constituant un éjecteur qui est ensuite remise en place dans la matrice après interposition d'une cale et retrait de la matière ayant rempli le dégagement, de sorte que l'éjecteur fasse, au repos, légèrement saillie au-dessus de la ligne de coupe de la matrice et soit susceptible d'être déformé dans le dégagement.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une coupe-élévation schématique de la partie active d'une presse et de l'outil de l'invention en cours d'élaboration.

Les fig. 2 et 3 sont des coupes-élévations analogues à la fig. 1 illustrant deux phases successives de réalisation de l'outil de l'invention.

La fig. 4 est une coupe-élévation illustrant une position caractéristique d'un éjecteur réalisé conformément à l'invention dans l'une de ses phases de travail.

La fig. 5 est une coupe-élévation analogue à la fig. 1 illustrant une phase de réalisation d'une autre partie de l'outil.

Les fig. 6 et 7 sont des coupes-élévations analogues à la fig. 5 illustrant deux phases correspondantes de réalisation de la partie d'outil en cours d'élaboration de la fig. 5.

La fig. 8 est une coupe-élévation de l'ensemble de l'outil pour le détourage d'une pièce lors d'une phase de travail de l'outil réalisé.

Le dessin illustre schématiquement, à la partie haute, un plateau supérieur de presse désigné par 1 et, à la partie basse, un plateau inférieur de presse désigné par 2.

Les plateaux sus-décrits sont destinés à supporter par des moyens de fixation, non représentés mais bien connus dans la technique, respectivement des semelles 3 et 4 d'un outil supérieur 5 et d'un outil inférieur 6 pour le détourage de pièces de tôle.

L'outil supérieur comporte un poinçon 7 fixé à la semelle 3. Le poinçon 7 est destiné, pour le travail, a être entouré par une couronne de maintien 8 dénommée dans ce qui suit dévêtisseur étant donné que la fonction de cette partie d'outil consiste à séparer le bord inutile, ou chute, de la pièce de tôle qui doit être séparé de la pièce elle-même dans le cours de l'opération de détourage décrite ci-après.

Pour illustrer de façon concrète les opérations décrites dans ce qui suit le dévêtisseur 8 est représenté en traits mixtes car il n'est pas en place pour la fabrication de l'éjecteur qui va être expliquée. Le dévêtisseur est suspendu à des organes 9 reliés à la semelle 3.

Le poinçon 7 est constitué par un outil métallique normal réalisé par les techniques habituelles aux travaux de préparation d'outils d'emboutissage.

Le poinçon 7 présente latéralement des dégagements 12 faisant que le dévêtisseur 8 peut coulisser sur des portées 13 de hauteur réduite et permettant aussi le travail dudit dévêtisseur lorsqu'il est en place comme décrit dans ce qui suit.

La semelle inférieure 4 est munie de façon habituelle à la technique de réalisation des outils de presse d'une couronne 14 dénommée dans la technique rehausse sur laquelle repose une matrice 15.

Les rehausse 14 et matrice 15 sont destinées à contenir un éjecteur 16 qui doit pouvoir coulisser et pour cette raison des dégagements 17 sont prévus dans la matrice 15 afin que l'éjecteur 16 soit simplement guidé par une portée 18 de la matrice 15.

Une plaque 19 formant rehausse d'éjecteur est fixée sur la semelle 4 par des vis telles que celles représentées en 20 et cette rehausse 19 supporte elle-même des vis 21 destinées à la fixation de l'éjecteur 16.

Pour la réalisation de l'éjecteur 16 destiné à constituer l'une des parties de l'outil de presse on unifie la surface de la rehausse d'éjecteur 19 en recouvrant les têtes des vis 20 d'une pâte à modeler, par exemple celle connue sous le nom de Plastilline, et on remplit les dégagements 17 de cire ou matière analogue pour délimiter une paroi lisse sans contre-dépouille et convenablement alignée avec la portée 18 de la matrice 15. On munit également le dessus des vis 21 destinées à la fixation de l'éjecteur de cales 23 par exemple en résine, notamment en polystyrène, puis on enduit les surfaces libres c'est-à-dire notamment les portées 18 et le dessus de la plaque de rehausse 19 d'un produit lubrifiant permettant le démoulage.

De la résine et son accélérateur sont ensuite disposés dans l'espace laissé libre au-dessus de la plaque de rehausse 19 jusqu'au niveau supérieur de la matrice 15.

La résine utilisée est de préférence une résine polyuréthanne. A titre d'exemple, la résine peut être celle portant la référence UR 555 et l'accélérateur ou durcisseur celui portant la même référence UR 555, ces résine et accélérateur durcisseur étant commercialisés notamment par la société CIBA.

Comme cela est indiqué dans ce qui précède, les matrices 15 sont réalisées en tant que pièces de travail c'est-à-dire de préférence en acier au moins dans les parties devant être soumises à des contraintes mécaniques élevées c'est-à-dire la partie de coupe.

Outre ce qui précède, on munit les plateaux supérieur et inférieur d'éléments de butée à savoir par exemple une chandelle 25 fixée à la semelle 3, une enclume 26 portée par la semelle 4 et une cale 27 dite cale de butée portée par la chandelle 25. Les dimensions des organes ci-dessus sont choisies pour que les semelles 3 et 4 soient amenées l'une par rapport à l'autre en fin de course des plateaux supérieur 1 et inférieur 2 de la presse à un écartement déterminé correspondant exactement à celui de l'exécution d'une opération de travail, en l'occurrence une opération de détourage. Pour réaliser l'éjecteur 16, lorsque la résine et son accélérateur durcisseur ont été mis en place, on munit le poinçon 7 d'une pièce type 28 c'est-à-dire d'une pièce prototype ou bien, si une telle pièce n'est pas disponible, on revêt le poinçon 7 de cire ou de vinyle pour réaliser un habillage de forme et épaisseur correspondant à celui d'une pièce.

Lorsque les opérations ci-dessus sont effectuées, la presse est actionnée pour faire descendre son plateau supérieur vers son plateau inférieur.

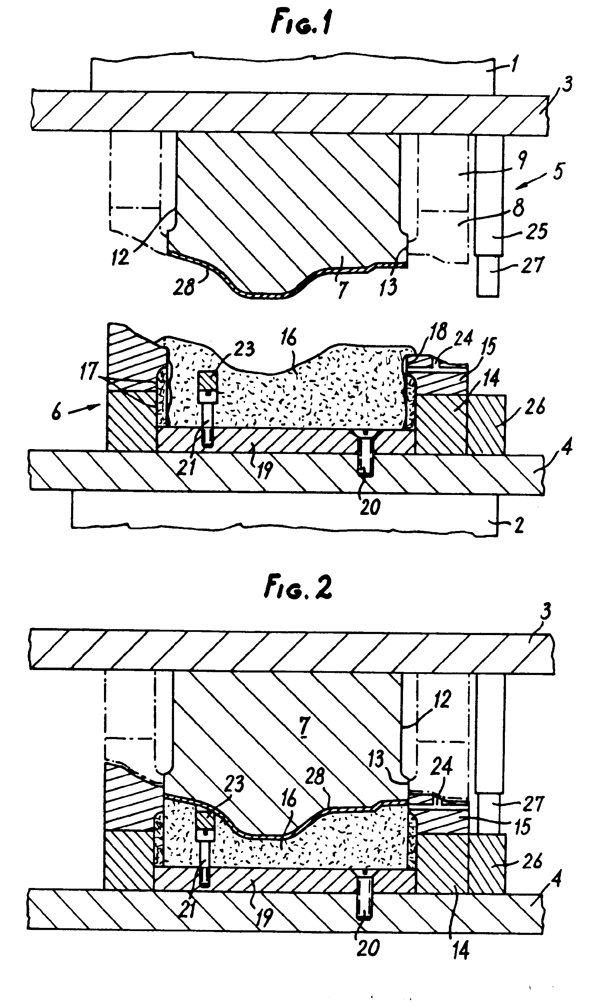

Comme le montre la fig. 2, cette descente a pour effet de faire descendre le poinçon 7 dans la matrice 15 pour pénétrer à l'intérieur de celle-ci sur une mesure comprise entre 1,5 et 2,5 mm par exemple. L'éjecteur est ainsi comprimé et mis en forme par la pièce type 28 ou l'habillage qui y est substitué.

Le surplus de résine devant constituer l'éjecteur 16 flue par des trous ou canaux 24 de la matrice 15.

Pour permettre la polymérisation convenable de la résine constitutive de l'éjecteur, la presse est maintenue fermée pendant une durée d'environ 48 heures.

Une opération suivante de l'invention consiste, après polymérisation de la résine de l'éjecteur 16, à ouvrir à nouveau la presse, ce qui fait que le poinçon 7 est ramené à sa position initiale. L'éjecteur 16 est alors extrait des matrices et la cire, ou autre produit, contenue dans les dégagements 17 est retirée de même que la pâte à modeler recouvrant les têtes des vis 20. Le retrait des cales 23 en polystyrène ou autre matière recouvrant les vis 21 permet d'avoir accès à celles-ci pour le retrait facile de l'éjecteur 16 sans qu'il soit besoin de procéder à un perçage nécessitant un repérage des vis 21 noyées dans la résine constitutive dudit éjecteur 16.

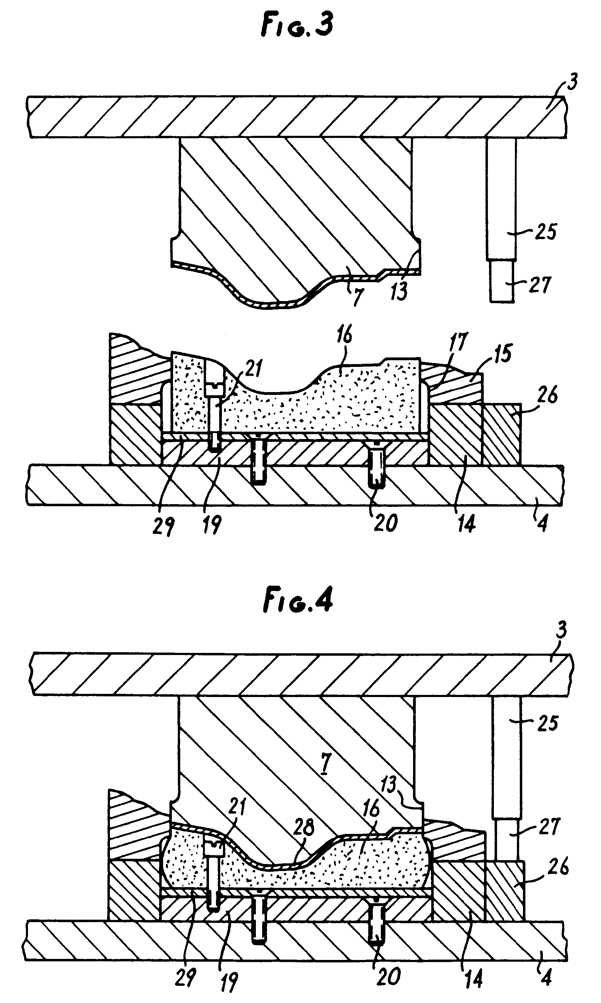

Dans une opération suivante illustrée à la fig. 3, une cale 29 est mise en place sur la plaque de rehausse 19 de façon que l'éjecteur 16, lorsqu'il est au repos, dépasse au-dessus de la ligne de découpe de la matrice 15 d'une mesure d'environ 1 à 2 mm, cette mesure dépendant d'ailleurs de l'épaisseur moyenne de la partie en résine de l'éjecteur.

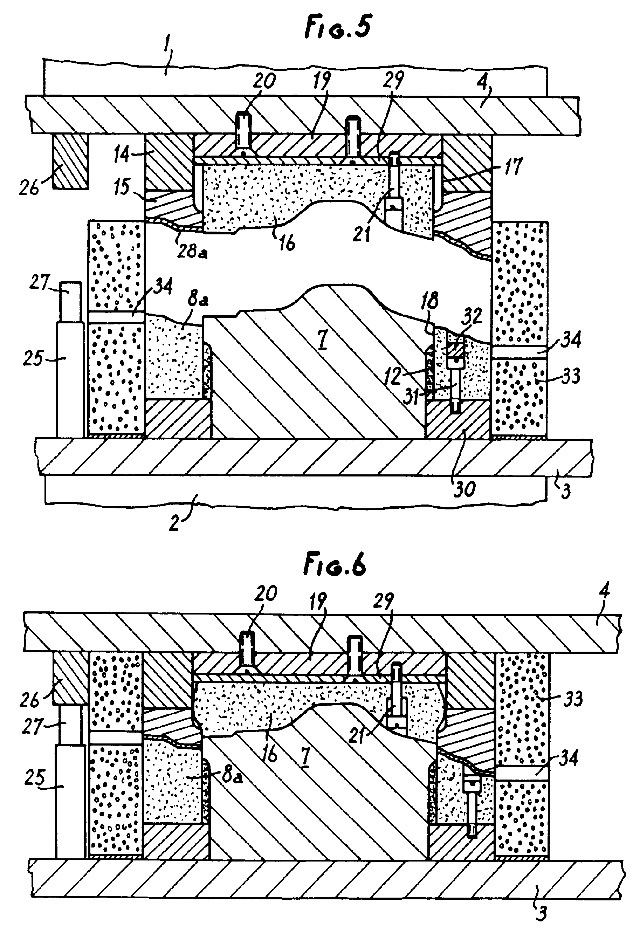

Les fig. 5 à 8 illustrent comment le dévêtisseur 8 est lui-même réalisé en mettant en oeuvre des opérations analogues à celles décrites ci-dessus pour la réalisation de l'éjecteur 16. Pour cela l'ensemble porté initialement par le plateau 1 est démonté puis fixé au plateau 2 de presse, ce qui est illustré à la fig.5 à laquelle les mêmes numéros de référence désignent les mêmes organes que ceux décrits dans ce qui précède. Dans la pratique, tout se passe par simple démontage et remontage des semelles 3 et 4 sans démontage des organes qu'elles portent.

On voit à la fig. 5 que les vis 21 servent à suspendre l'éjecteur 16. Le poinçon 7 est monté sur la semelle 4 qui est alors munie d'une rehausse de dévêtisseur 30 sur laquelle sont mises en place des vis 31 recouvertes de cales 32 en polystyrène ou matière analogue. Les dégagements 12 du poinçon 7 sont remplis de cire, de vinyle ou matière analogue pour que l'ensemble du poinçon présente latéralement des côtés alignés avec la portée 18.

Outre ce qui précède, on dispose sur la semelle 3 une enveloppe 33 percée de trous 34 à des niveaux qui correspondent sensiblement au niveau que doit occuper la partie supérieure du dévêtisseur en cours de réalisation.

L'enveloppe 33 peut, par exemple, être réalisée par des plaques en polystyrène collées sur la semelle 4. Après enduisage des parois du poinçon 7 de la rehausse de dévêtisseur 30 et de l'enveloppe 33 d'un lubrifiant de démoulage, de la résine, préalablement mélangée à un accélérateur durcisseur, est mise en place entre le poinçon et l'enveloppe 33.

De préférence, la résine est de même nature, voire identique, à celle qui a été utilisée pour la fabrication de l'éjecteur 16.

Une opération suivante consiste à mettre en place sous la matrice 15, une chute 28a provenant d'une pièce type 28. Un garnissage de cire ou analogue peut aussi être utilisé.

La presse est ensuite descendue, ce qui a pour effet que la chute de pièce 28a met en forme le dessus du dévêtisseur 8 qui est formé par la résine.

Le surplus de résine s'écoule par les trous 34.

Il est avantageux que la hauteur de l'enveloppe 33 soit telle qu'elle soit serrée par la semelle 4 en fin de course c'est-à-dire lorsque la cale de butée 27 est en appui sur l'enclume 26.

Lorsque l'enveloppe 33 est réalisée par des plaques en polystyrène, il est avantageux que celles-ci soient déformées par compression de quelques millimètres, ce qui assure un maintien efficace du côté du dévêtisseur 8a qui est moulé par l'enveloppe 33.

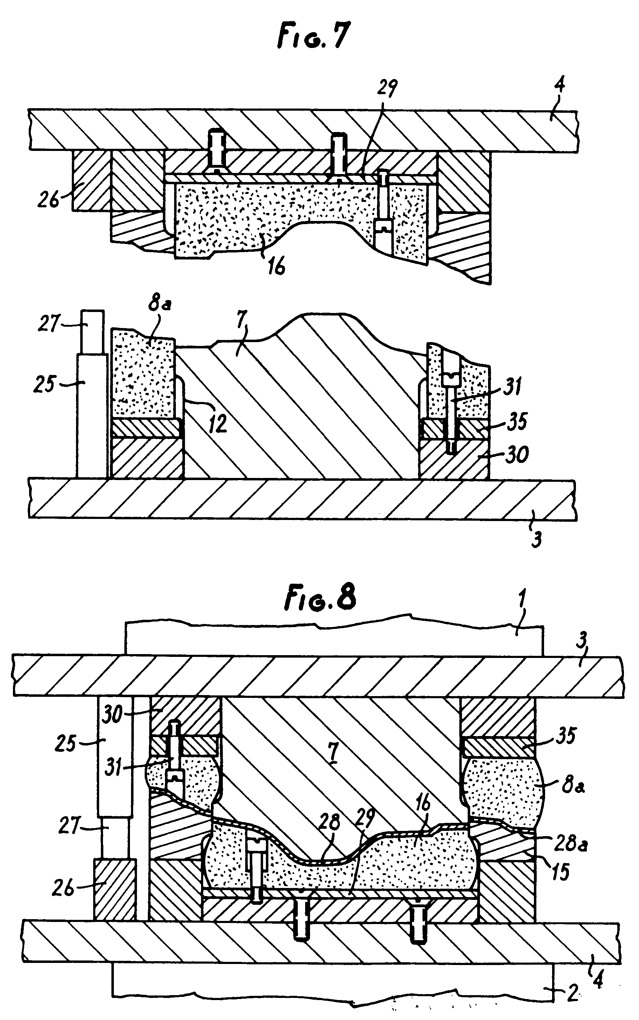

Après polymérisation c'est-à-dire environ 48 heures pour la résine polyuréthanne considérée, la presse est ouverte, ce qui permet de retirer l'enveloppe 33 puis ensuite de démonter le dévêtisseur 8a pour nettoyer les dégagements 12 et mettre en place, au-dessus de la rehausse de dévêtisseur 30, une cale 35 (fig. 7) faisant que ledit dévêtisseur 8a fait saillie au-dessus du poinçon 7 de quelques millimètres par exemple trois millimètres au-dessus de la ligne de découpe dudit poinçon.

Tant l'éjecteur 16 que le dévêtisseur 8a ayant été moulés sur place aucune opération d'usinage n'est nécessaire si ce n'est d'araser les parties de résine saillant dans les trous 34 et les canaux 17.

Il suffit ensuite, pour que l'outil devienne opérationnel, de démonter à nouveau les semelles 3 et 4 et de retourner l'ensemble de l'outil pour fixer la semelle 4 au plateau de presse 1 alors que la semelle 3 est fixée au plateau inférieur 2 ce qui est illustré à la fig. 8 qui montre, en outre, comment travaille l'outil complet de détourage et la relation des pièces en fin de course de travail de la presse.

On voit que l'éjecteur 16 est comprimé de la même manière qu'illustré à la fig. 4 de sorte que la pièce 28 est détourée et que la chute 28a est maintenue sur la matrice 15 par le dévêtisseur 8a qui est déformé élastiquement.

On peut constater que, lorsque le plateau de presse sera à nouveau soulevé, la chute 28a sera maintenue sur la matrice 15 en même temps que le dévêtisseur 8a reprendra sa forme initiale qui est celle de la fig. 7. Le maintien sera ainsi assuré tant que la chute 28a n'aura pas échappé au poinçon 7 pendant la remontée puis, au fur et à mesure de cette remontée, l'éjecteur 16 soulèvera la pièce 28 pour qu'elle soit accessible au dessus de la matrice 15. En effet, au début d'une opération de détourage, le poinçon amène le dévêtisseur 8 en appui sur la partie de pièce 28 à détourer. Le poinçon continuant son mouvement de descente coopère avec le bord de coupe de la matrice 15 tout en comprimant l'éjecteur 16 dont la déformation élastique peut se produire, cet éjecteur se déformant dans les dégagements 17 de la matrice et de la rehausse 14.

Après relevage du poinçon, la pièce 28 peut être extraite de la matrice puisque l'éjecteur 16 reprend sa forme et donc la position illustrée à la fig. 3.

Le mouvement relatif du dévêtisseur 8 par rapport au poinçon fait que la partie 28a de la pièce 28, qui constitue la chute, est maintenue tout d'abord sur la matrice 15 pendant le soulèvement du poinçon dont la portée 13 est finalement escamotée à l'intérieur du dévêtisseur 8 comme montré à la fig. 7. De cette manière la chute peut elle-même être retirée facilement.

L'invention n'est pas limitée à l'exemple de réalisation représenté et décrit en détail, car diverses modifications peuvent y être apportées selon les revendications sans sortir de son cadre.

## Revendications

1. Outils de presse pour le détourage de pièces embouties, l'outil comportant un poinçon (7) entouré par un dévêtisseur (8, 8a) et ledit poinçon coopérant avec au moins une matrice de coupe (15) sur le dessus de laquelle le bord (28a) de la pièce (28) est maintenu par le dévêtisseur au moins l'espace délimité par la matrice contenant au moins un éjecteur (16) en matière élastiquement déformable, ledit éjecteur (16) présentant un dessus dont la forme correspond au moins partiellement à celle de la pièce (28), caractérisé en ce que le dessus de l'éjecteur fait légèrement saillie au-dessus du bord de coupe, de la matrice (15) lorsque l'outil est au repos, sa face étant conformée de manière complémentaire à la forme de la pièce (28), et en ce que supplémentairement le dévêtisseur (8a) est réalisé en matière élastiquement déformable, sa face faisant, en position de repos, saillie au-delà du poinçon et étant conformée de manière complémentaire à la forme d'une chute (28a) de la pièce (28).

2. Outil suivant la revendication 1, caractérisé en ce que la matrice (15) et une rehausse (14) supportant cette matrice délimitent des dégagements (17) pour la déformation de l'éjecteur (16) en résine déformable lors de la compression de celui-ci pendant l'opération de détourage de la pièce (28).

3. Outil suivant l'une des revendications 1 et 2, caractérisé en ce que le poinçon (7) présente au moins un dégagement (12) pour contenir la matière du dévêtisseur (8a) lors de la déformation de celui-ci provoquée au cours de l'opération de détourage de la pièce (28).

4. Procédé pour la fabrication en résine synthétique d'au moins un éjecteur (16) d'un outil à détourer une pièce emboutie (28), caractérisé en ce qu'on prévoit de former au moins un dégagement (17) dans une matrice (15) ou une rehausse (14) fixée sur une semelle (4) d'un plateau de presse, en ce qu'on remplit ce dégagement d'une matière amovible du genre cire, vinyle ou analogue pour délimiter une paroi plane, en ce qu'on recouvre les parois internes de la matrice et de ses supports d'un lubrifiant de démoulage, en ce qu'on remplit l'espace libre de résine mélangée à son accélérateur durcisseur, en ce qu'on fait descendre un poinçon (7) fixé à une seconde semelle (3) après avoir muni le dessous du poinçon (7) d'une pièce type (28), ou d'un habillage correspondante à une pièce type, de sorte que la surface libre de la résine est mise en forme pour correspondre à la forme des pièces qui seront à détourer, en ce qu'on maintient fermée ladite presse jusqu'à polymérisation de la résine et en ce qu'on démoule la résine durcie constituant un éjecteur qui est ensuite remis en place dans la matrice après interposition d'une cale (29) et retrait de la matière ayant rempli le dégagement (17) de sorte que l'éjecteur (16) fasse, au repos, légèrement saillie au- dessus de la ligne de coupe de la matrice (15) et soit susceptible d'être déformé dans le dégagement (17).

5. Procédé suivant la revendication 4, caractérisé en ce que l'éjecteur en résine est formé sur le dessus d'une rehausse (19) fixée sur la semelle (4).

6. Procédé suivant l'une des revendications 4 et 5, caractérisé en ce que des canaux (24) sont prévus pour l'évacuation du surplus de résine amené à fluer lors de la descente du poinçon pour la mise en forme de la résine devant constituer l'éjecteur.

7. Procédé suivant l'une des revendications 4 à 6, caractérisé en ce que, pour réaliser supplémentairement un dévêtisseur en résine déformable, on met en place le poinçon sur le plateau inférieur de presse, on prévoit au moins un dégagement (12) dans la paroi latérale du poinçon, on met en place une rehausse (30) autour dudit poinçon, ladite rehausse étant munie de vis, on dispose une enveloppe (33) autour de la rehausse, on verse entre ladite enveloppe et le poinçon de la résine accélérée par un durcisseur, on ferme la presse dont la matrice (15) a été munie d'une chute ou d'un garnissage (28a) correspondant à la forme de la chute résultant du détourage de pièces devant être travaillées ultérieurement, on fait descendre la matrice pour serrer ladite chute (28a) sur la surface de la résine mise en place, on maintient la presse fermée jusqu'à polymérisation, on ouvre ensuite la presse, on démontre l'enveloppe (33), on démonte après l'avoir arasé le dévêtisseur constitué par la résine polymérisée et on remet en place ce dévêtisseur sur cette rehausse (30) après interposition d'une cale (35) faisant que ledit dévêtisseur (8) fasse saillie au-delà du bord de coupe du poinçon (7).

8. Procédé suivant l'une des revendications 4 à 7, caractérisé en ce que le dévêtisseur est formé conformément au procédé de la revendication 8 alors que la matrice est munie d'un éjecteur en résine synthétique réalisée conformément à l'une des revendications 5 à 8.

9. Procédé suivant l'une des revendications 4 à 8, caractérisé en ce que, pour mettre en place le poinçon sur le plateau inférieur de presse (2), on intervertit les semelles porte-poinçon (3) et porte- matrice (4).

10. Procédé suivant l'une des revendications 4 9, caractérisé en ce que, pour assurer le détourage des pièces (28), les semelles (3, 4), sur lesquelles ont été formés l'éjecteur (16) et le dévêtisseur (8), sont simplement retournées pour être fixées aux plateaux (1, 2) respectivement opposés de la presse.

11. Procédé suivant l'une des revendications 4 à 10, caractérisé en ce que tant l'éjecteur (16) que le dévêtisseur (8) son fixés à leur rehausse par des vis (21) mises en place avant dépôt de la résine, lesdites vis étant recouvertes d'une cale (22, 23) en résine destructible notamment en polystyrène pour former un bouchon amovible après mise en forme et polymérisation de la résine constituant respectivement l'éjecteur et le dévêtisseur.

12. Procédé suivant l'une des revendications 4 à 11, caractérisé en ce que l'enveloppe (33) mise en place pour la réalisation du dévêtisseur (8) est constituée par des blocs de polyuréthanne collé sur la semelle portant le poinçon, la hauteur desdits blocs étant supérieure à l'espace séparant les semelles (3, 4) en fin de course de serrage de la presse.

13. Procédé suivant l'une des revendications 4 à 12, caractérisé en ce que la course de la presse est contrôlée par des éléments de butée (25, 26, 27) interposés entre les semelles portées par les plateaux.

**Claims**

1. Press tool for the trimming of embossed parts, the tool comprising a punch (7) surrounded by a stripper (8, 8a) and said punch cooperating with at least one cutting die (15) on the top of which the edge (28a) of the part (28) is maintained by the stripper, at least the space delimited by the die containing at least one ejector (16) of elastically deformable material, said ejector (16) having a top whose shape corresponds at least partially to that of the part (28), characterized in that the top of the ejector is slightly protruding above the cutting edge of the die (15) when the tool is at rest, its surface being shaped in a manner complementary to the shape of the part (28), and in that in addition the stripper (8a) is made of an elastically deformable material, its surface in the rest position protruding beyond the punch and being shaped in a complementary manner to the shape of a scrap portion (28a) of the part (28).

2. Tool according to claim 1, characterized in that the die (15) and a raising member (14) supporting this die delimit clearance recesses (17) for deforming the ejector (16) of deformable resin upon compressing the same during the step of trimming the part (28).

3. Tool according to one of claims 1 and 2, characterized in that the punch (7) has at least one clearance recess (12) for containing the material of the stripper (8a) under deformation of the same caused during the step of trimming the part (28).

4. Process for the manufacture in synthetic resin of at least one ejector (16) of a tool for trimming an embossed part (28), characterized in that there is provided to form at least one clearance recess (17) in a die (15) or a raising member (14) secured onto a sole (4) of a press plate, in that this clearance recess is filled with a removable material, of the type of wax, vinyl or the like so to form a flat wall, in that the inner walls of the die and supports thereof are coated with a pattern removing lubricant, in that the free space is filled with a resin mixed with its hardener accelerator, in that a punch (7) secured to a second sole (3) is lowered after having provided the bottom of the punch (7) with a standard part (28) or with a covering member corresponding to a standard part, so that the free surface of the resin is shaped to correspond to the shape of the parts which will be trimmed, in that said press is kept closed until polymerization of the resin, and in that the hardened resin is taken from the mould for forming an ejector which is then put back in the die after interposing a shim (29) and shrinkage of the material having filled the clearance recess (17) so that the ejector (16), at rest, will project slightly above the cutting line of the die (15) and will be able to be deformed in the clearance recess (17).

5. Process according to claim 4, characterized in that the resin ejector is formed on the top of a raising member (19) secured to the sole (4).

6. Process according to one of claims 4 and 5, characterized in that channels (24) are provided to evacuate the excess resin made to flow upon the lowering of the punch for shaping the resin having to form the ejector.

7. Process according to one of claims 4 to 6, characterized in that, in order to additionally realize a deformable resin stripper, the punch is placed on the lower press plate, at least one clearance recess (12) is provided in the lateral wall of the punch, a raising member (30) is placed around said punch, said raising member being provided with screws, a casing (33) is disposed around the raising member, an amount of resin accelerated by a hardener is pourred between said casing and the punch, the press is closed, the die (15) thereof having been provided with a scrap part or a lining (28a) corresponding to the shape of the scrap part resulting from the trimming of parts having to the subsequently worked, the die is lowered to press said scrap part (28a) onto the surface of the positioned resin, the press is kept closed until polymerization, the press is then opened, the casing (33) is disassembled, the stripper consisting of the polymerized resin is disassembled after having been shaved, and this stripper is put back in place on this raising member (30) after a shim (35) has been interposed ensuring thereby that said stripper (8) will project beyond the cutting edge of the punch (7).

8. Process according to one of claims 4 to 7 characterized in that the stripper is formed according to the process of claim 7, while the die is provided with a synthetic resin ejector made according to one of claims 5 to 7.

9. Process according to one of claims 4 to 8, characterized in that, in order to place the punch on the lower press plate (2), the punch carrier (3) and die carrier (4) soles are interchanged.

10. Process according to one of claims 4 to 9, characterized in that, in order to provide trimming of the parts (28), the soles (3, 4) on which the ejector (16) and the stripper (8) have been formed are simply turned over in order to be secured to the respectively opposite plates (1, 2) of the press.

11. Process according to one of claims 4 to 10, characterized in that both the ejector (16) and the stripper (8) are secured to their raising member by means of screws (21) which are positioned before depositing the resin, said screws being covered with a destructible resin shim (22, 23) typically made of polystyrene in order to form a removable stopper after shaping and polymerizing of the resin constituting the ejector and the stripper, respectively,

12. Process according to one of claims 4 to 11, characterized in that the casing (33) which in positioned to make the stripper (8) consists of polyurethane blocks glued onto the sole bearing the punch, the height of said blocks being larger than the space separating the soles (3, 4) at the limit clamping travel of the press.

13. Process according to one of claims 4 to 12, characterized in that the travel of the press is controlled by stop elements (25, 26, 27) inserted between the soles carried by the plates.

**Patentansprüche**

1. Pressgerät zum Beschneiden vom bombierten Teilen, welches einen von einem Abstreifer (8,8 a) umgebenen Stempel (7) umfaßt, der zumindest mit einer Schnittmatrize (15) zusammenwirkt, auf deren Oberseite der Rand (28a) des Teiles (28) vom Abstreifer gehalten ist, wobei zumindest der durch die Matrize begrenzte Raum zumindest einen Auswerfer (16) aus elastisch deformierbarem Material enthält, dessen Oberseite eine zumindest teilweise der Form des Teiles (28) entsprechende Form aufweist, dadurch gekennzeichnet, daß der Auswerfer (16) etwas über den Schneiderand der Matrize (15) hinausragt, wenn das Gerät im Ruhezustand ist, seine Oberfläche komplementär zur Form des Teiles (28) ausgebildet ist, und daß zusätzlich der Abstreifer (8a) aus elastisch deformierbarem Material hergestellt ist und seine Oberfläche im Ruhezustand über den Stemple hinausragt und komplementär zur Form des Verschnittes (28 a) des Teiles (28) ausgebildet ist.

2. Gerät nach Anspruch 1, dadurch gekennzeichnet, daß die Matrize (15) und ein diese Matrize tragender Füllrahmen (14) Ausnehmungen (17) für die Deformation des Auswerfers (16) aus deformierbarem Harz während der Komprimierung desselben bei der Operation des Beschneidens der Teile (28) begrenzen.

3. Gerät nach einem der Ansprüche 1 oder 2, dadurch gekennzeichnet, daß der Stempel (7) zumindest eine Ausnehmung (12) zur Aufnahme des Materials des Abstreifers (8a) während der Deformierung desselben bei der Operation des Beschneidens der Teile (28) aufweist.

4. Verfahren zur Herstellung zumindest eines Auswerfers (16) aus Kunstharz für ein Gerät zum Beschneiden bombierter Teile (28), dadurch gekennzeichnet, daß zumindest eine Ausnehmung (17) in einer Matrize (15) oder in einem auf der Sohle (4) der Preßplatte fixierten Füllrahmen gebildet wird, daß diese Ausnehmung mit einem entfernbaren Material von Wachs-, Vinyl- oder gleichartigem Typ zur Begrenzung einer ebenen Wandung ausgefüllt wird, daß die Innenwandungen der Matrize und deren Träger mit einem Ausformungtrennmittel überzogne werden, daß der freibleidende Raum mit einem mit einem Aushärtungsbeschleuniger gemischten Harz ausgefüllt wird, daß ein an einer zweiten Sohle (3) angebrachter Stempel (7) abgesenkt wird, nachdem dessen Unterseite mit einem Modell-Teil (28) oder einer einem Modell-Teil entsprechenden Verkleidung versehen wurde, sodaß die freie Oberfläche des Harzes derart geformt wird, daß sie der Form der zu beschneidenden Teile entspricht, daß das Pressgerät bis zur Polymerisation des Harzes geschlossen gehalten wird, daß das einen Auswerfer bildende ausgehärtete Harz aus der Form gehoben und danach wieder eingesetzt wird, nachdem eine Unterlage (29) eingesetzt und das die Ausnehmung (17) ausfüllende Material entfernt wurde, sodaß der Auswerfer (16) im Ruhezustand etwas über die Schnittlinie der Matrize (15) hinausragt und in die Ausnehmung (17) hinein deformierbar ist.

5. Verfahren nach Anspruch 4, dadurch gekennzeichnet, daß der Auswerfer aus Harz auf der oberen Oberfläche eines Füllrahmens (19) gebildet wird, der auf einer Sohle (4) fixiert ist.

6. Verfahren nach einem der Ansprüche 4 und 5, dadurch gekennzeichnet, daß Kanäle (24) zum Abführen der überschüssigen Menge von Harz während des Absenkens des Stempels zum Formen des Harzes vorgesehen sind, bevor dieses den Auswerfer bildet.

7. Verfahren nach einem der Ansprüche 4 und 6, dadurch gekennzeichnet, daß zur ergänzenden Bildung eines Abstreifers aus deformierbarem Harz der Stempel auf die untere Platte der Presse gesetzt wird, daß zumindest eine Ausnehmung (12) in der Seitenwand des Stempels vorgesehen wird, daß ein Füllrahmen (30) mit Schrauben versehen um den Stempel herum eingesetzt wird, ein Mantel (33) um den Füllrahmen angebracht und zwischen den besagten Mantel und den Stempel Harz mit einem Aushärtungsbeschleuniger eingebracht wird, daß die Presse geschlossen wird, deren Matrize (15) mit einem Verschnitt oder einer der Form des Verschnittes die sich aus dem Beschneiden von später an bearbeitenden Teilen ergibt entsprechenden Verkleidung (28a) versehen wurde, und die Matrize abgesenkt wird, um den besagten Verschnitt (28a) auf die Oberfläche des eingebrachten Harzes zu pressen, daß die Presse bis zur Polymerisation geschlossen gehalten, danach geöffnet und der Mantel (33) abgenommen wird, daß der Abstreifer nach Nachschneiden abgenommen und nach Einsetzen einer Unterlage (35) wieder auf dem Füllrahmen montiert wird, wobei die Unterlage bewirkt, daß der besagte Abstreifer (8) über den Schneiderand des Stempels (7) hinausragt.

8. Verfahren nach einem der Ansprüche 4 bis 7,

dadurch gekennzeichnet, daß der Abstreifer gemäß dem Verfahren des Anspruches 7 hergestellt ist, sowie die Matrize mit einem Auswerfer aus Kunstharz versehen ist, der entsprechend den Ansprüchen 4 bis 6 hergestellt ist.

9. Verfahren nach einem der Ansprüche 4 bis 8, dadurch gekennzeichnet, daß zum Einsetzen des Stempels auf die untere Platte (2) der Presse die den Stempel tragende Sohle (3) und die die Matrize tragende Sohle (4) ausgetauscht werden.

10. Verfahren nach einem der Ansprüche 4 bis 9, dadurch gekennzeichnet, daß zum Beschneiden des Teiles (28) die Sohlen (3,4) auf welchen der Auswerfer (16) und der Abstreifer (8) gebildet sind, einfach umgedreht werden, um an den einander gegenüberliegenden Platten (1,2) der Presse fixiert zu werden.

11. Verfahren nach einem dem Ansprüche 4 bis 10, dadurch gekennzeichnet, daß sowohl der Auswerfer (16) als auch der Abstreifer (8) an ihrem Füllrahmen mittels vor der Ablagerung des Harzes eingesetzter Schrauben (21) fixiert sind, wobei diese Schrauben mit einem Füllstück (22, 23) aus zerstörbarem Harz, insbesondere Polystyrol, bedeckt sind, damit ein nach dem Formen und Polymerisieren des den Auswerfer und den Abstreifer bildenden Harzes entfernbarer Stopfen gebildet wird.

12. Verfahren nach einem der Ansprüche 4 bis 11, dadurch gekennzeichnet, daß der Mantel (33), der zur Herstellung des Abstreifers (8) angebracht wird, aus auf die den Stempel tragende Sohle aufgeklebten Polyurethanblöcken besteht, wobei die Höhe dieser Blöcke größer ist als der Zwischenraum zwischen den Sohlen (3,4) am Ende des Schließweges der Presse.

13. Verfahren nach einem der Ansprüche 4 bis 12, dadurch gekennzeichnet, daß der Weg der Presse mittels Anschlagelementen (25, 26, 27) gesteuert wird, die zwischen die von den Platten getragenen Sohlen eingesetzt sind.

## Fig.1

## Fig. 2

## FIG.3

## FIG.4

Fig.5

Fig.6

EP 0 305 239 B1

## Fig. 7

## Fig. 8

12